(19) Europäisches Patentamt
European Patent Office
Office européen des brevets

(11) **EP 1 896 315 B1**

(12) **FASCICULE DE BREVET EUROPEEN**

(45) Date de publication et mention
de la délivrance du brevet:
**14.08.2013 Bulletin 2013/33**

(21) Numéro de dépôt: **05781865.0**

(22) Date de dépôt: **24.06.2005**

(51) Int Cl.:
***B62D 15/02*** *(2006.01)*       ***B62D 13/06*** *(2006.01)*

(86) Numéro de dépôt international:
**PCT/FR2005/050493**

(87) Numéro de publication internationale:
**WO 2006/136664 (28.12.2006 Gazette 2006/52)**

(54) **PROCEDE D'ASSISTANCE A LA CONDUITE, POUR LES MANOEUVRES DE MARCHE ARRIERE AVEC UN VEHICULE ATTELE**

FAHRASSISTENZVERFAHREN FÜR DAS RÜCKWÄRTS PARKEN EINES FAHRZEUGS MIT ANHÄNGER

DRIVE ASSISTING METHOD FOR REVERSAL PATH WITH A DRAWN VEHICLE

(84) Etats contractants désignés:
**AT BE BG CH CY CZ DE DK EE ES FI FR GB GR HU IE IS IT LI LT LU MC NL PL PT RO SE SI SK TR**

(43) Date de publication de la demande:
**12.03.2008 Bulletin 2008/11**

(73) Titulaire: **RENAULT TRUCKS**
**69800 St Priest (FR)**

(72) Inventeur: **DECHAMP, François**
**F-71250 CLUNY (FR)**

(74) Mandataire: **Putet, Gilles et al**
**RENAULT TRUCKS**
**VTEC France - Corporate Patents**
**TER E70 2 12**
**99, route de Lyon**
**69806 Saint Priest Cedex (FR)**

(56) Documents cités:
**DE-A1- 19 806 655      GB-A- 2 398 050**
**US-A- 5 247 442      US-B1- 6 854 557**

## Description

### Domaine technique

L'invention concerne un procédé d'assistance à la conduite d'un véhicule, et notamment d'un véhicule industriel du type camion. Elle concerne plus spécifiquement des véhicules attelés, comportant une articulation entre un tracteur et une remorque. Il peut donc s'agir d'un véhicule du type semi-remorque dans lequel la semi-remorque est articulée au niveau d'une sellette sur un tracteur. Il peut également s'agir d'un attelage comportant un camion du type porteur, à l'arrière duquel est articulée une remorque.

L'invention concerne plus particulièrement une assistance à la commande de direction pour les véhicules comportant un système de direction conventionnel, par transmission mécanique d'un ordre issu du volant, ou de façon plus générale d'un organe commande de direction.

L'invention concerne donc plus précisément un procédé d'assistance destiné à faciliter la tâche du chauffeur lors des manoeuvres de marche arrière. En effet, compte tenu de l'articulation entre le tracteur et la remorque, les manoeuvres de marche arrière qui ne sont pas en ligne droite nécessitent d'enchaîner de façon appropriée des opérations de braquage et de contre braquage.

### Techniques antérieures

Comme déjà évoqué, les manoeuvres de marche arrière, par exemple lors de mise à quai, ou d'opérations de stationnement, nécessitent une certaine habileté de la part du chauffeur, compte tenu de l'articulation entre les deux parties du véhicule. Cette habileté est d'autant plus nécessaire que le champ de vision directe du chauffeur est relativement limité, voire inexistant puisque les rétroviseurs sont montés sur le véhicule tracteur, et ne permettent pas de visualiser l'espace à l'arrière de la remorque, lorsque celle-ci n'est pas parfaitement alignée avec le tracteur.

Pour faciliter les manoeuvres de marche arrière sur différents véhicules, des solutions ont déjà été proposées, mettant en oeuvre un dispositif d'acquisition d'image, situé à l'arrière du véhicule, et permettant de visualiser l'espace situé à l'arrière de la remorque. De tels systèmes ont notamment été décrits dans les documents DE 101 42 367, US 6 366 221, US 6 564 122, et WO 2004/022413.

Ces dispositifs facilitent les manoeuvres de marche arrière, mais sont toutefois plus particulièrement adaptés pour les véhicules du type porteur. En effet, sur les véhicules attelés, il reste nécessaire pour le chauffeur d'enchaîner les étapes de braquage et de contre braquage de manière adéquate, pour réaliser les manoeuvres de marche arrière.

Par ailleurs, on a décrit dans le document US 3 605 088 un dispositif installé en cabine d'un véhicule attelé. Ce dispositif est interfacé avec des mécanismes de tringlerie permettant de détecter les situations dans lesquelles l'attelage se trouve dans des positions angulaires extrêmes par rapport au tracteur. Dans ce cas, le chauffeur est informé par affichage lumineux de la nécessité de procéder à un braquage ou à un contre braquage. Un tel dispositif permet d'éviter que le tracteur ne vienne percuter l'attelage dans une configuration dite "de mise en portefeuille". Autrement dit, ce dispositif ne permet pas l'assistance lors de l'intégralité de la manoeuvre de marche arrière, mais seulement la génération d'alertes dans des situations angulaires extrêmes. Un autre dispositif permettant d'éviter les mises en portefeuille est décrit dans le document US 6 292 094.

Pour faciliter les manoeuvres de marche arrière, il est également connu par le document WO 96/21582 d'informer le chauffeur de la distance séparant l'arrière de son véhicule des différents obstacles existants. Un dispositif analogue a été décrit dans le document US 6 564 122 dans lequel un affichage en cabine permet de détecter si la trajectoire en cours risque de rencontrer un obstacle situé à l'arrière du véhicule. US-5.247.442 décrit un procédé basé sur l'égalisation de l'angle tracteur/remorque avec un angle remorque/cible. Le chauffeur peut être informé la quantité et la direction d'une correction requise pour l'angle de braquage.

L'ensemble de ces dispositifs procurent une certaine aide au chauffeur, mais il demeure nécessaire pour ce dernier de décider à quels instants doivent être déclenchées les étapes de braquage et de contre braquage, pour réaliser la manoeuvre de marche arrière souhaitée.

Par ailleurs, d'un camion à l'autre, les repères du chauffeur peuvent changer, en fonction de l'empattement du tracteur, de l'emplacement du point d'articulation, ainsi que de la longueur de la remorque. On conçoit donc qu'il y a donc un intérêt à procurer au chauffeur une assistance tout au long de la manoeuvre de marche arrière, et ce en fonction des caractéristiques propres du véhicule.

### Exposé de l'invention

L'invention a pour objectif de faciliter les opérations de manoeuvre en marche arrière sur les véhicules articulés. L'invention concerne donc plus précisément un procédé d'assistance à la conduite, pour les manoeuvres de marche arrière d'un véhicule attelé comportant un tracteur et une remorque articulée par rapport au tracteur. Ce procédé concerne les véhicules équipés d'un dispositif de direction conventionnel, dans lequel l'angle de braquage des roues directrices est une image de la position d'un organe de commande de direction mû par le chauffeur.

Conformément à l'invention, pendant les manoeuvres de marche arrière :

- ■ on sélectionne un point cible par lequel on souhaite faire passer la trajectoire du véhicule ;

■ on calcule une consigne d'angle de braquage en fonction dudit point cible et de la géométrie du véhicule ;

■ on affiche sur un dispositif de visualisation accessible au chauffeur, cette consigne d'angle de braquage, en comparaison avec la valeur d'angle de braquage effective, correspondant à la position de l'organe de commande de direction, qui est affectée par un curseur se deplaçant sur un axe sur lequel sont représentées les bornes de la plage située de part et d'autre de la position de la consigne de braquage.

Autrement dit, l'invention consiste à faire en sorte que pendant les manoeuvres de marche arrière, le chauffeur soit en permanence informé de l'angle de braquage idéal qu'il doit donner au volant, et donc aux roues directrices, pour amener le véhicule dans la position qu'il a préalablement sélectionnée. Ainsi, un calculateur approprié assure une détermination de la variation souhaitable de l'angle de braquage de manière à conserver l'attelage dans une configuration qui permette d'atteindre le point visé.

Le chauffeur est donc assisté dans la commande qu'il doit exercer sur le volant, de manière à enchaîner les phases de braquage et de contre braquage, de sorte qu'à la fin de la manoeuvre, le point visé soit atteint.

En pratique, la sélection du point cible peut s'effectuer de différentes manières.

Ainsi, dans une première variante, la sélection du point cible peut être affichée en cabine, sur un écran de visualisation du champ arrière du véhicule. Dans ce cas, la sélection du point cible peut s'effectuer grâce à un système de pointage actionnable par le chauffeur, interfacé avec cet écran de visualisation du champ arrière du véhicule. La sélection à proprement parler du point cible peut se faire par une action sur un organe approprié, grâce à une mire présente sur l'écran, que le chauffeur peut déplacer à volonté, puis figer. Il est également possible que le chauffeur fasse évoluer la position du point cible en agissant sur cette mire pendant la manoeuvre de marche arrière assistée. La position du point cible étant mémorisée, elle peut éventuellement être actualisée sur l'écran de visualisation par un recalcul prenant en compte le déplacement du véhicule, et donc l'évolution du champ de vision arrière.

Dans une autre variante, la sélection du point cible peut être réalisée de façon automatique, par le choix d'une manoeuvre de déplacement à effectuer. Plus précisément, lorsque le véhicule se trouve dans une position à proximité des zones de stationnement, il est possible de proposer au chauffeur différentes manoeuvres, telle que la réalisation d'un créneau, une manoeuvre de stationnement en épi à un angle prédéterminé, ou un stationnement à 90° à gauche ou à droite. Dès lors que le chauffeur a sélectionné la manoeuvre qu'il souhaite effectuer, l'angle optimal de braquage est alors affiché sur le dispositif de visualisation, en fonction de la manoeuvre sélectionnée.

En pratique, la consigne d'angle de braquage peut être affichée sous la forme d'une plage d'angle à l'intérieur de laquelle l'angle de braquage effectif doit idéalement rester.

En pratique, au moment de sa sélection, le point cible sélectionné peut être situé à une distance prédéterminée de l'arrière de la remorque. Ainsi, le point cible peut être déterminé par ses coordonnées dans un repère lié à la remorque, dont un axe correspond à l'axe longitudinal de cette dernière. Dans ce cas, le point cible se trouve avec une coordonnée fixe dans ce repère, et peut s'écarter latéralement de l'axe de la remorque.

En pratique, le calcul de la consigne d'angle de braquage comporte plusieurs étapes durant lesquelles :

■ on calcule une première consigne d'angle entre les axes de la remorque et du tracteur, en fonction du point cible visé et de la géométrie du véhicule ;

■ on calcule alors la consigne d'angle de braquage comme résultant d'un asservissement faisant tendre l'angle mesuré entre les axes de la remorque et du tracteur vers la première consigne d'angle.

En d'autres termes, le procédé consiste à déterminer, dans une position donnée, l'angle optimal entre le tracteur et la remorque qui permet d'atteindre le point visé. L'angle de braquage est alors calculé pour déformer l'articulation de l'attelage en vue de tendre vers cet angle optimal entre tracteur et remorque.

En pratique, la consigne d'angle de braquage peut prendre en compte différentes composantes se cumulant avantageusement.

Ainsi, une première composante de la consigne d'angle de braquage est fonction du rayon de courbure de la trajectoire du point d'articulation de la remorque par rapport au tracteur. Ce rayon de courbure est déterminé par rapport à la géométrie du véhicule, et notamment la position de l'essieu arrière fixe de la remorque ainsi que de la position du point visé.

La commande de l'angle de braquage peut intégrer une seconde composante, qui peut être obtenue en fonction, notamment par un traitement proportionnel intégral dérivé, de la différence de l'angle mesuré entre les axes du tracteur et de la remorque, et la première consigne d'angle identifiée précédemment.

En pratique, la consigne d'angle de braquage peut comporter une composante supplémentaire, qui est prise en compte lorsque l'angle entre les axes du tracteur et la remorque dépasse un seuil prédéterminé en vue de réduire cet angle. En effet, il importe que la commande de braquage ne conduise pas à situation où l'angle entre la remorque et le tracteur entraîne une "mise en portefeuille" de l'attelage.

Le chauffeur peut être assisté complémentairement, par des affichages supplémentaires qui le renseignent sur le déroulement optimal de la manoeuvre.

Ainsi, il peut être avantageux que le chauffeur ait à sa disposition une indication de la distance restant à parcourir jusqu'au point cible, afin de limiter sa vitesse à l'approche immédiate de l'objectif.

Il est également possible d'aider le chauffeur, en lui donnant une indication calculée d'une vitesse maximale préconisée pour effectuer les manoeuvres de marche arrière. Ce calcul prend en considération la distance restant à parcourir avant d'atteindre le point cible. Il est également possible de décomposer la manoeuvre en plusieurs phases nécessitant d'enchaîner des braquages et contre-braquages. Dans la mesure où l'on détermine des points particuliers de la trajectoire comme ceux où la consigne d'angle de braquage évolue plus rapidement, il est avantageux d'indiquer au chauffeur la distance restant à parcourir pour atteindre chacun de ces points particuliers, afin d'éviter d'y arriver à vitesse excessive. Il est également possible d'indiquer une vitesse maximale préconisée, calculée en fonction de cette distance restante.

**Description sommaire des figures**

La manière de réaliser l'invention, ainsi que les avantages qui en découlent ressortiront bien de la description du mode de réalisation qui suit, à l'appui des figures annexées dans lesquelles :

> La figure 1 est une vue en perspective sommaire d'un camion évoluant dans un environnement permettant la mise en oeuvre de l'invention.
> La figure 2 est une vue en perspective sommaire de l'intérieur d'une cabine d'un véhicule mettant en oeuvre le procédé conforme à l'invention.
> La figure 3 est un organigramme montrant de façon schématique l'enchaînement des étapes de l'invention.
> La figure 4 est un diagramme simplifié montrant le fonctionnement des différentes étapes de l'invention.
> La figure 5 est une vue schématique de dessus d'un camion sur lequel sont représentés les différents angles et distances utilisés dans la mise en oeuvre de l'invention.
> La figure 6 est une vue analogue à la figure 5, montrant le camion dans une configuration particulière.

**Manière de réaliser l'invention**

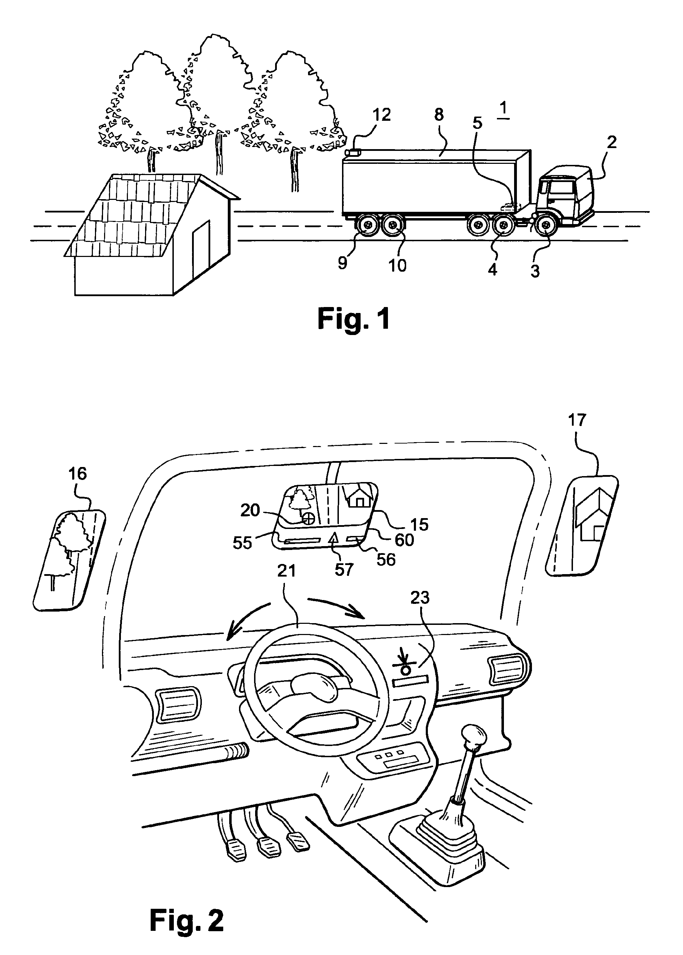

Comme déjà évoqué, l'invention concerne un procédé de commande de l'angle de braquage des roues directrices d'un véhicule articulé, tel qu'illustré à la figure 1. Un tel véhicule 1 comprend donc un tracteur 2 comportant deux essieux 3, 4, ainsi qu'une sellette 5 sur laquelle est articulé le point d'attache d'une remorque 8. Cette remorque 8 comprend en partie arrière deux essieux 9, 10 ainsi qu'un dispositif d'acquisition d'image 12 représenté schématiquement sur la paroi supérieure de la remorque 8.

Comme illustré à la figure 2, ce dispositif d'acquisition d'image 12 permet d'afficher le champ de vision arrière du véhicule sur un écran 15, présent à proximité du volant 21. A la figure 2, cet écran 15 est disposé au niveau central et haut du pare-brise, mais il va de soi qu'il pourrait être disposé dans un autre endroit, sans sortir du cadre de l'invention.

De la sorte, en combinaison avec les deux rétroviseurs gauche et droit 16, 17, le chauffeur a à sa disposition différents champs de vision complémentaires et qui ne se recouvrent pas obligatoirement si la remorque et le tracteur ne sont pas alignés.

Conformément à l'invention, le chauffeur peut effectuer une sélection d'un point cible sur lequel il souhaite voir passer la trajectoire de son véhicule, en marche arrière. La figure 2 illustre un exemple dans lequel cette sélection se fait par l'intermédiaire de l'écran 15 de visualisation du champ de vision du champ arrière. Plus précisément, avant d'initier la manoeuvre de marche arrière, et par exemple donc avant l'enclenchement d'une marche arrière, le chauffeur peut passer en mode de sélection de la cible, en déplaçant une mire 20 sur l'écran 15 par l'intermédiaire d'un dispositif, du type molette ou levier 23 approprié. Le déplacement de ce dispositif assure le décalage de la mire 20 sur l'écran 15. Lorsque la mire 20 coïncide avec le point cible visé par le chauffeur, ce dernier effectue une opération de validation de cette position qui va initier le calcul caractéristique de l'invention. Le chauffeur peut en permanence faire évoluer la cible en agissant sur la mollette 23, et en opérant la validation de cette nouvelle cible.

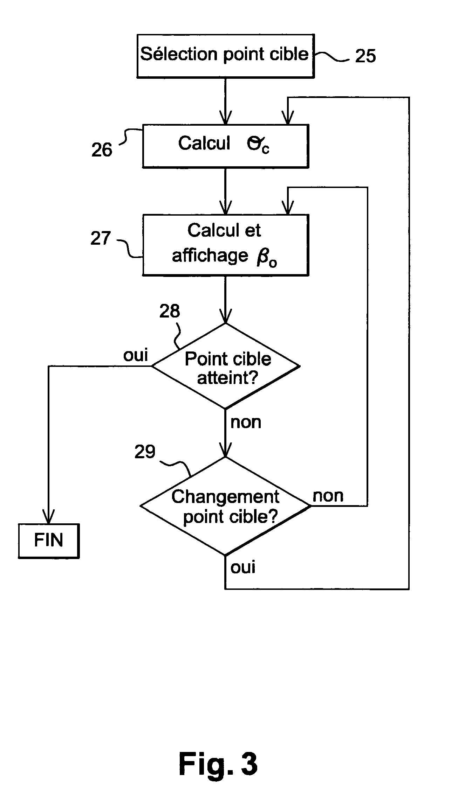

Comme illustré à la figure 3, le procédé conforme à l'invention comporte donc une première étape 25 au cours de laquelle le chauffeur sélectionne le point cible par lequel la trajectoire du véhicule doit passer. Puis, cette sélection effectuée, le procédé se poursuit par une étape 26 de calcul de l'angle $\theta_C$ correspondant à l'angle idéal que doit adopter l'axe du tracteur par rapport à l'axe de la remorque. Ce premier calcul engendre, selon l'étape 27, le calcul de la consigne $\beta_0$ d'angle de braquage, qui est alors affichée à l'attention du chauffeur. Ce procédé se poursuit tant que le point cible n'est pas atteint, ce qui est vérifié par l'étape 28.

Si le chauffeur ne modifie pas le point cible, selon le test 29, alors le procédé se poursuit de façon continue par un calcul 27 de la consigne $\beta_0$ d'angle de braquage. En effet, de par la cinématique du véhicule, les manoeuvres de braquage font mécaniquement évoluer l'angle $\theta$ de l'articulation entre le tracteur et la remorque, qui intervient dans le calcul de la consigne $\beta_0$, comme exposé ci-après.

En revanche, si le chauffeur modifie sa sélection du point cible, par exemple en agissant sur la mollette 23 (figure 2), et en opérant la validation de cette nouvelle cible, alors un nouveau calcul 26 de l'angle $\theta_C$ est effectué, et le procédé se poursuit par un nouveau calcul de la consigne d'angle de braquage $\beta_0$, selon l'étape 27.

Il est également possible dans des variantes non illustrées de sélectionner la manoeuvre à réaliser et donc un point cible par le choix d'une manoeuvre du type créneau, à droite ou à gauche par exemple.

En pratique, les différentes étapes du procédé, et notamment les différents calculs et les asservissements peuvent être réalisées par l'intermédiaire d'un ou plusieurs calculateurs embarqués, grâce à des moyens logiciels et/ou matériels programmés à cet effet.

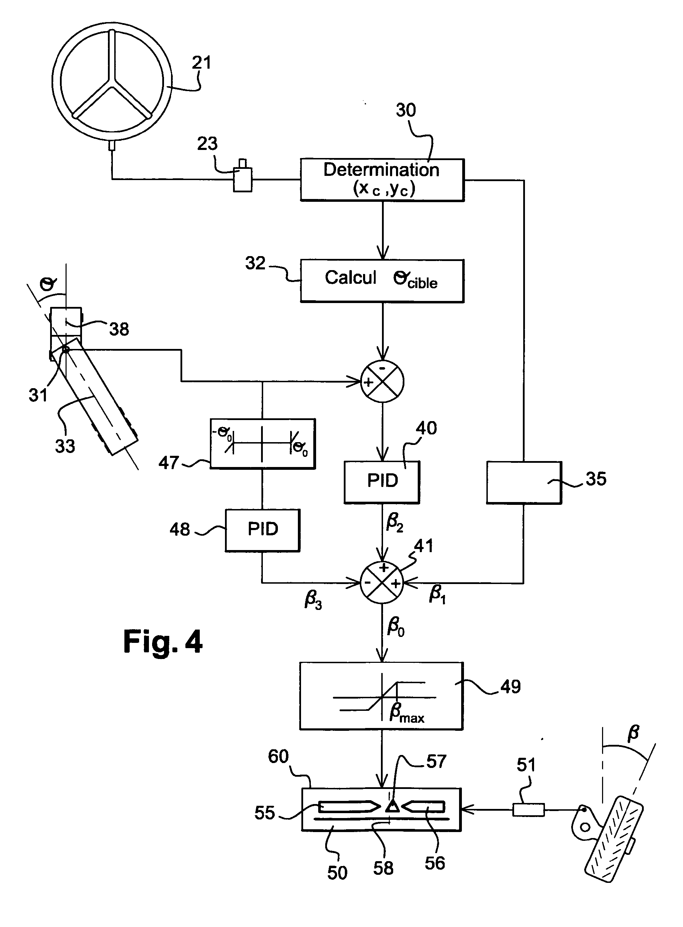

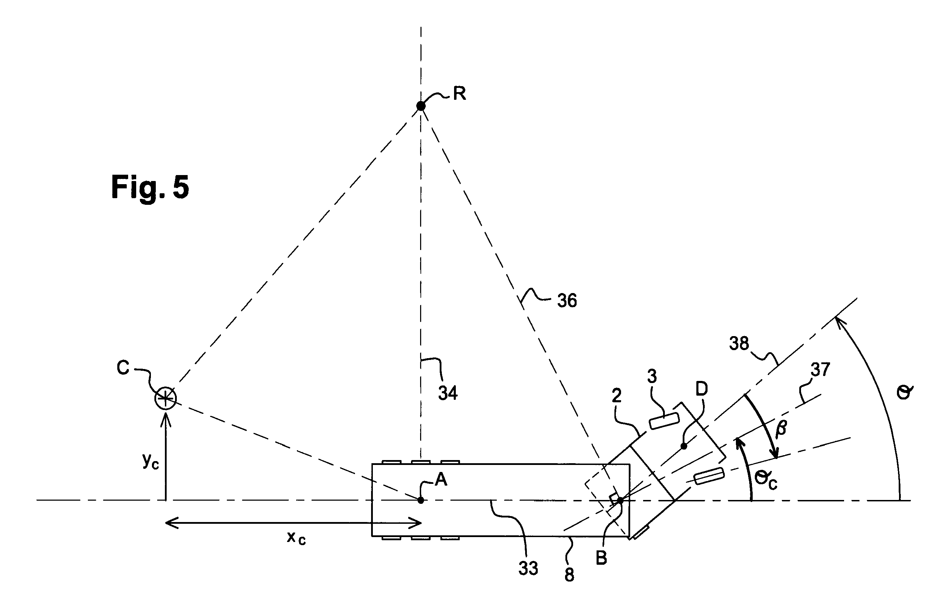

Le déroulement du procédé apparaît de façon détaillée à la figure 4, en combinaison avec la figure 5 sur laquelle sont représentés les points et les axes caractéristiques du procédé. Ainsi, dès lors que le chauffeur a fixé la position du point cible C, visible à la figure 5, et qu'il l'a validée en agissant par exemple sur l'organe 23 approprié, le procédé conforme à l'invention est enclenché, par la détermination 30 du point cible visé C, consistant à convertir la position de la mise 20 présente sur l'écran 15, en coordonnées du point cible. Cette détermination se fait par le calcul des coordonnées $x_c$, $y_c$ de ce point C dans un repère basé sur le point A, situé à l'aplomb de l'essieu fixe arrière de la remorque. Dans le cas où la remorque comporte plusieurs essieux fixes arrières, ce point A est situé à un niveau médian entre les essieux. Le repère caractéristique est donc formé par l'axe 33 de la remorque et un axe perpendiculaire 34 passant par le point A. Par hypothèse, au moment de la sélection, le point cible C se trouve avec une coordonnée $x_c$ selon l'axe 33 qui adopte une valeur prédéterminée, pouvant aller jusqu'à quelques dizaines de mètres environ. Le point cible peut s'écarter latéralement de l'axe 33 de la remorque. La position de la mire 20 sur l'écran correspond donc à un écart latéral de la mire par rapport à l'axe 33 de la remorque, qui est converti en la coordonnée $y_c$ selon l'axe 34 du repère. Dans ces conditions, le déplacement de la mire 20 selon une seule direction horizontale suffit à déterminer la position du point cible C.

De la sorte, il est possible de calculer la position du centre de rotation idéale R situé à équidistance du point visé C et du point A, situé au niveau de l'essieu arrière, ce centre de rotation R étant aligné avec l'axe 34 passant par l'essieu arrière. Cet axe étant perpendiculaire à l'axe 33 de la remorque, le point R est ainsi clairement défini.

Ce centre de rotation R permet de déterminer l'axe selon lequel la poussée exercée par le tracteur doit idéalement s'appliquer au niveau du point B d'articulation entre la remorque et le tracteur. Cette poussée doit idéalement s'exercer selon un axe 37 qui est perpendiculaire à la droite 36 reliant le centre de rotation R et le point d'articulation B.

De la sorte, selon l'étape 32, il est possible de déterminer la valeur de l'angle $\theta_C$ correspondant à l'angle idéal que doit adopter l'axe du tracteur 38 par rapport à l'axe de la remorque 33. De manière chiffrée, et par application de règles géométriques basiques, cet angle de

consigne vaut $\theta_c = \tan^{-1}(\dfrac{AB}{\dfrac{y_c}{2} + \dfrac{x_c^2}{2y_c}})$, où $x_c, y_c$ sont les coordonnées du point cible C dans le repère évoqué précédemment.

Un capteur d'angle 31 disposé au niveau du point d'articulation B permet de mesurer l'angle réel $\theta$ mesuré entre l'axe 33 de la remorque et celui 38 du tracteur.

Conformément à l'invention, l'asservissement utilisé pour le calcul de la consigne $\beta_0$ de l'angle de braquage prend en compte plusieurs composantes qui se cumulent.

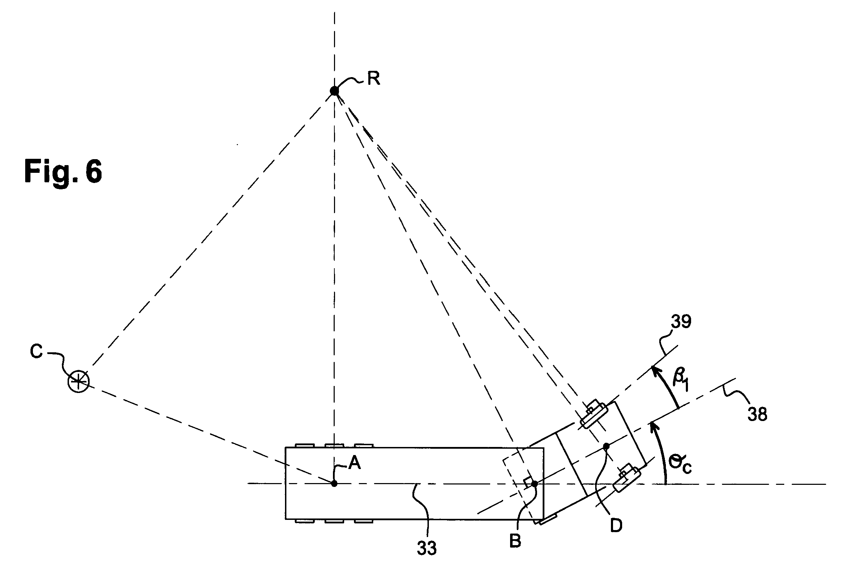

Une première composante peut être calculée, selon l'étape 35, à partir de la position du point de rotation R combinée avec la géométrie du véhicule et plus précisément du tracteur. Cette première composante $\beta_1$ vise à orienter les roues directrices de manière optimale, lorsque l'angle entre l'axe 38 du tracteur et l'axe 33 de la remorque atteint la valeur d'angle de consigne $\theta_C$ évoquée ci-avant. Cette configuration, illustrée à la figure 6, est telle que les plans 39 des roues sont sensiblement tangents à des cercles de centre R. Cette première composante $\beta_1$ est donc prépondérante lorsque le tracteur et la remorque forment entre eux un angle se rapprochant de la valeur $\theta_C$, donc en particulier vers la fin de la manoeuvre.

En tenant compte d'approximations sur le parallélisme des roues directrices, la première composante $\beta_1$ se calcule comme suit : $\beta_1 = \tan^{-1}(\dfrac{DB}{RB})$, dans laquelle BD est la distance séparant le point d'articulation B du point D situé au niveau de l'essieu directeur du tracteur, et RB est la distance séparant le point de rotation idéal R du point d'articulation B de la remorque par rapport au tracteur, soit, en application de relations géométriques basiques, $RB = \sqrt{\left(\dfrac{y_c}{2} + \dfrac{x_c^2}{2y_c}\right)^2 + AB^2}$.

Le calcul de la consigne $\beta_0$ d'angle de braquage prend en compte une seconde composante $\beta_2$, résultant d'un traitement de la différence entre l'angle réel $\theta$ et l'angle de consigne $\theta_C$. Cette seconde composante a donc pour but de permettre au véhicule de rejoindre la trajectoire dans laquelle l'angle entre le tracteur et la remorque a atteint la valeur de consigne $\theta_C$. Elle est donc prépondérante au début de la manoeuvre, lorsque l'attelage est dans une configuration éloignée de celle qui doit idéalement conduire au point cible et qui est illustrée à la figure 6. La différence $(\theta - \theta_C)$ peut être filtrée par un régulateur PID 40 pour donner la second composante $\beta_2$ permettant la détermination de la consigne d'angle de

braquage $\beta_0$, selon l'équation suivante :

$$\beta_2 = k_2.(\theta - \theta_c) + k_3.\frac{d(\theta - \theta_c)}{dt}.$$

En pratique, le coefficient $k_2$ est déterminé en fonction des empattements combinés de la remorque et du tracteur. Ce coefficient ne doit pas être trop élevé pour éviter d'engendrer des phénomènes de contre-braquage trop rapides. Il doit toutefois être suffisant pour permettre au véhicule d'atteindre la trajectoire souhaitée le plus rapidement possible. Le coefficient $k_3$ du régulateur PID 40 assure une fonction d'amortissement, et limite la vitesse de variation de la consigne $\beta_0$ d'angle de braquage, lorsque la vitesse de variation de l'angle $\theta$ est trop importante. Ces coefficients peuvent également dépendre d'une éventuelle limitation de la vitesse du véhicule, mise en oeuvre lors des manoeuvres de marche arrière. En effet, si la vitesse est limitée, les risques de mise en portefeuille sont plus réduits, et il est alors possible d'utiliser des coefficients plus élevés pour le PID 40, donnant une correction plus réactive.

Cette seconde composante $\beta_2$ vient s'ajouter au niveau de l'additionneur 41 à la première composante $\beta_1$. Ces deux composantes sont importantes pour délivrer au chauffeur une consigne qui lui permette d'atteindre le point cible le plus rapidement possible.

Par ailleurs, pour éviter la mise en portefeuille du camion, dans le cas où l'angle $\theta$ viendrait à être trop important, une troisième composante $\beta_3$ est calculée. Cette composante est prise en compte 47 uniquement lorsque l'angle $\theta$ dépasse une valeur prédéterminée $\theta_0$ au-delà de laquelle ce risque existe. Lorsque ce risque se présente, cette composante $\beta_3$ devient prépondérante par rapport aux première $\beta_1$ et seconde $\beta_2$ composantes évoquées ci-avant. En effet, son objectif essentiel est d'éviter que le tracteur ne vienne heurter la remorque, en injectant dans le calcul de la consigne $\beta_0$ d'angle de braquage, une composante de contre-braquage qui s'oppose rapidement à l'augmentation excessive de l'angle $\theta$, en valeur absolue. On notera toutefois que cette troisième composante constitue un aspect optionnel de l'invention, dans la mesure où elle a pour objectif de surveiller automatiquement l'apparition de situations potentielles de mise en portefeuille, surveillance qui peut être effectuée par le chauffeur lui-même. Autrement dit, l'invention couvre des variantes de réalisation dans lesquelles cette troisième composante n'est pas calculée.

Cette composante $\beta_3$, après filtrage par un régulateur PID 48 est soustraite à la somme des deux autres composantes $\beta_1$, $\beta_2$, pour donner la consigne d'angle de braquage $\beta_0$.

Par la suite, cette somme $\beta_0$ est saturée 49 pour éviter de dépasser l'angle maximum de braquage $\beta_{max}$ autorisé par le système de direction. Cette consigne d'angle $\beta_0$ est ensuite affichée en cabine, par exemple dans une zone 60 de l'écran 15 de visualisation du champ arrière, ou bien encore sur un autre dispositif approprié.

Cette consigne $\beta_0$ est représentée par une plage d'angle, centrée sur $\beta_0$, et à l'intérieur de laquelle le chauffeur doit idéalement maintenir l'angle de braquage réel $\beta$. L'angle réel de braquage $\beta$, qui est mesuré grâce au capteur 51, est lui également affiché par un curseur 57 se déplaçant sur l'axe sur lequel sont représentées les bornes 55, 56 de la plage situé de part et d'autre de la position 58 de la consigne d'angle de braquage $\beta_0$.

Complémentairement, le procédé conforme à l'invention peut déterminer une vitesse maximum qu'il convient de ne pas dépasser afin d'éviter les risques de mise en portefeuille de l'attelage. Cette vitesse maximale peut être affichée sur l'écran de visualisation, ou sur tout autre dispositif approprié. Cette vitesse peut également être utilisée pour limiter l'action de l'accélérateur et empêcher ainsi tout dépassement de cette vitesse maximum.

Il ressort de ce qui précède que le procédé conforme à l'invention permet de faciliter les opérations de marche arrière d'un véhicule articulé, dans lequel la visibilité arrière est inexistante, pour lequel les manoeuvres sont complexes.

## Revendications

1. Procédé d'assistance à la conduite, pour les manoeuvres de marche arrière avec un véhicule (1) comportant un tracteur (2) et une remorque articulée (8) par rapport audit tracteur (2), ledit véhicule (1) étant équipé d'un dispositif de direction dans lequel l'angle de braquage des roues directrices est une image de la position d'un organe de commande (21) de direction mû par le chauffeur, **caractérisé en ce que** :

   - on sélectionne un point cible (C) par lequel on souhaite faire passer la trajectoire du véhicule ;
   - on calcule une consigne ($\beta_0$) d'angle de braquage en fonction dudit point cible (C) et de la géométrie du véhicule (1) ;
   - on affiche, sur un dispositif de visualisation (15) accessible au chauffeur, ladite consigne ($\beta_0$) d'angle de braquage, en comparaison avec la valeur d'angle de braquage effective ($\beta$), correspondant à la position de l'organe de commande de direction (21), qui est affichée par un curseur (57) se déplaçant sur un axe sur lequel sont représentées les bornes (55, 56) de la plage située de part et d'autre de la position (58) de la consigne de braquage ($\beta_0$).

2. Procédé selon la revendication 1, **caractérisé en ce que** la sélection du point cible s'effectue par un système de pointage (20) actionnable par le chauffeur, interfacé avec un écran de visualisation (15) du champ de vision arrière du véhicule.

**3.** Procédé selon la revendication 1, <u>**caractérisé**</u> **en ce que** la sélection du point cible est réalisée de façon automatique par le choix d'une manoeuvre de déplacement à effectuer.

**4.** Procédé selon la revendication 1, <u>**caractérisé**</u> **en ce que** la consigne ($\beta_0$) d'angle de braquage est affichée sous la forme d'une plage d'angle.

**5.** Procédé selon la revendication 1, <u>**caractérisé**</u> **en ce que** le calcul de la consigne d'angle de braquage comporte les étapes suivantes durant lesquelles :

- on calcule une première consigne d'angle ($\theta_c$) entre les axes de la remorque (33) du tracteur (38), en fonction du point cible (C) et de la géométrie du véhicule ;
- on calcule la consigne d'angle ($\beta_0$) de braquage comme résultant d'un asservissement faisant tendre l'angle ($\theta$) mesuré entre les axes de la remorque et du tracteur vers ladite première consigne ($\theta_c$).

**6.** Procédé selon la revendication 1, <u>**caractérisé**</u> **en ce que** la consigne d'angle ($\beta_0$) de braquage prend en compte une composante ($\beta_1$) qui est fonction du rayon de courbure de la trajectoire du point d'articulation (B) de la remorque (8) par rapport au tracteur (2)

**7.** Procédé selon la revendication 1, <u>**caractérisé**</u> **en ce que** la consigne ($\beta_0$) d'angle de braquage prend en compte une composante ($\beta_2$) fonction de la différence entre l'angle ($\theta$) mesuré entre les axes (33,38) du tracteur et de la remorque, et ladite première consigne d'angle ($\theta_c$).

**8.** Procédé selon la revendication 1, <u>**caractérisé**</u> **en ce que** la consigne d'angle de braquage prend en compte une composante ($\beta_3$) évaluée lorsque l'angle (0) entre les axes du tracteur et de la remorque dépassent un seuil prédéterminé ($\theta_0$), et destinée à réduire ledit angle ($\theta$).

**9.** Procédé selon la revendication 1, <u>**caractérisé**</u> **en ce que** la consigne ($\beta_0$) d'angle de braquage est affichée en cabine dans une zone (60) d'un écran (15) de visualisation du champ arrière.

**Patentansprüche**

**1.** Fahrassistenzverfahren für Rückwärtsfahrmanöver mit einem Fahrzeug (1), das eine Zugmaschine (2) und einen bezüglich der Zugmaschine (2) angelenkten Anhänger (8) umfasst, wobei das Fahrzeug (1) mit einer Lenkvorrichtung ausgestattet ist, bei der der Einschlagwinkel der gelenkten Räder ein Abbild der Position eines Lenkungssteuerteils (21) ist, das von dem Fahrer bewegt wird, **dadurch** <u>**gekennzeichnet,**</u> **dass**

- ein Zielpunkt (C) ausgewählt wird, über den die Bahn des Fahrzeugs verlaufen soll;
- ein Sollwert ($\beta_0$) des Einschlagwinkels als Funktion des Zielpunkts (C) und der Geometrie des Fahrzeugs (1) berechnet wird;
- auf einer für den Fahrer zugänglichen Visualisierungsvorrichtung (15) der Sollwert ($\beta_0$) des Einschlagwinkels verglichen mit dem tatsächlichen Wert des Einschlagwinkels ($\beta$) angezeigt wird, der der Position des Lenkungssteuerteils (21) entspricht, die durch einen Cursor (57) angezeigt wird, der sich auf einer Achse verschiebt, auf der die Grenzen (55, 56) des Bereichs dargestellt sind, der sich auf beiden Seiten der Position (58) des Einschlagsollwerts ($\beta_0$) befindet.

**2.** Verfahren nach Anspruch 1, **dadurch** <u>**gekennzeichnet,**</u> **dass** die Auswahl des Zielpunkts durch ein vom Fahrer betätigbares Anzielsystem (20) erfolgt, das mit einem Visualisierungsbildschirm (15) des hinteren Sichtfeldes des Fahrzeugs eine Schnittstelle hat.

**3.** Verfahren nach Anspruch 1, **dadurch** <u>**gekennzeichnet,**</u> **dass** die Auswahl des Zielpunkts auf automatische Weise durch die Wahl eines durchzuführenden Fahrmanövers erfolgt.

**4.** Verfahren nach Anspruch 1, **dadurch** <u>**gekennzeichnet,**</u> **dass** der Sollwert ($\beta_0$) des Einschlagwinkels in Form eines Winkelbereichs angezeigt wird.

**5.** Verfahren nach Anspruch 1, **dadurch** <u>**gekennzeichnet,**</u> **dass** die Berechnung des Sollwerts des Einschlagwinkels die folgenden Schritte umfasst, während derer

- ein erster Winkelsollwert ($\theta_c$) zwischen den Achsen des Anhängers (33) und der Zugmaschine (38) als Funktion des Zielpunkts (C) und der Geometrie des Fahrzeugs berechnet wird, und
- der Sollwert ($\beta_0$) des Einschlagwinkels als Ergebnis einer Regelung berechnet wird, die den zwischen den Achsen des Anhängers und der Zugmaschine gemessenen Winkel ($\theta$) zum ersten Sollwert ($\theta_c$) streben lässt.

**6.** Verfahren nach Anspruch 1, **dadurch** <u>**gekennzeichnet,**</u> **dass** der Sollwert ($\beta_0$) des Einschlagwinkels eine Komponente ($\beta_1$) berücksichtigt, die eine Funktion des Krümmungsradius der Bahn des Anlenkpunkts (B) des Anhängers (8) bezogen auf die Zugmaschine (2) ist.

**7.** Verfahren nach Anspruch 1, **dadurch gekenn-zeichnet, dass** der Sollwert ($\beta_0$) des Einschlagwinkels eine Komponente ($\beta_2$) berücksichtigt, die eine Funktion der Differenz zwischen dem zwischen den Achsen (33, 38) der Zugmaschine und des Anhängers gemessenen Winkel ($\theta$) und dem ersten Winkelsollwert ($\theta_c$) ist.

**8.** Verfahren nach Anspruch 1, **dadurch gekennzeichnet, dass** der Sollwert des Einschlagwinkels eine Komponente ($\beta_3$) berücksichtigt, die bewertet wird, wenn der Winkel ($\theta$) zwischen den Achsen der Zugmaschine und des Anhängers einen vorbestimmten Schwellenwert ($\theta_0$) überschreitet, und die dazu bestimmt ist, den Winkel ($\theta$) zu reduzieren.

**9.** Verfahren nach Anspruch 1, **dadurch gekenn-zeichnet, dass** der Sollwert ($\beta_0$) des Einschlagwinkels in der Kabine in einem Bereich (60) eines Bildschirms (15) für die Visualisierung des rückwärtigen Bereichs angezeigt wird.

**Claims**

**1.** Method for assisting with driving, for backing-up maneuvers with a vehicle (1) comprising a tractor (2) and a trailer (8) that is articulated with respect to said tractor (2), said vehicle (1) being equipped with a steering device in which the steering angle of the steered wheels is an image of the position of a steering control member (21) moved by the driver, **characterized in that**:

> - a target point (C) through which the path of the vehicle is to pass is selected;
> - a steering angle setpoint value ($\beta_0$) is calculated as a function of said target point (C) and of the geometry of the vehicle (1);
> - said steering angle setpoint value ($\beta_0$) is displayed, on a display device (15) accessible to the driver, in comparison with the actual steering angle value ($\beta$) that corresponds to the position of the steering control member (21), which steering angle is displayed by a slider (57) moving along an axis on which the limits (55, 56) of the range situated on each side of the position (58) of the steering angle setpoint value ($\beta_0$) are represented.

**2.** Method according to Claim 1, **characterized in that** the target point is selected using an aiming system (20) that can be actuated by the driver, interfaced with a display screen (15) for viewing the field of view behind the vehicle.

**3.** Method according to Claim 1, **characterized in that** the target point is selected automatically by choosing a maneuver that is to be performed.

**4.** Method according to Claim 1, **characterized in that** the steering angle setpoint value ($\beta_0$) is displayed in the form of an angular range.

**5.** Method according to Claim 1, **characterized in that** calculating the steering angle setpoint value involves the following steps during which:

> - a first setpoint angle value ($\theta_c$) is calculated for the angle between the axes of the trailer (33) and of the tractor (38) as a function of the target point (C) and of the geometry of the vehicle;
> - the steering angle setpoint value ($\beta_0$) is calculated as the result of feedback control that causes the measured angle ($\theta$) between the axes of the trailer and of the tractor to tend toward said first setpoint value ($\theta_c$).

**6.** Method according to Claim 1, **characterized in that** the steering angle setpoint value ($\beta_0$) takes account of a component ($\beta_1$) which is a function of the radius of curvature of the path of the point (B) at which the trailer (8) is articulated to the tractor (2).

**7.** Method according to Claim 1, **characterized in that** the steering angle setpoint value ($\beta_0$) takes account of a component ($\beta_2$) that is a function of the difference between the measured angle ($\theta$) between the axes (33, 38) of the tractor and of the trailer, and said first setpoint angle ($\theta_c$).

**8.** Method according to Claim 1, **characterized in that** the steering angle setpoint value takes account of a component ($\beta_3$) evaluated when the angle ($\theta$) between the axes of the tractor and of the trailer crosses a predetermined threshold ($\theta_0$) and which is intended to reduce said angle ($\theta$).

**9.** Method according to Claim 1, **characterized in that** the steering angle setpoint value ($\beta_0$) is displayed in the cab in a zone (60) of a rear view display screen (15).

**Fig. 1**

**Fig. 2**

Sélection point cible ⟶ 25

26 ⟶ Calcul $\Theta_c$

27 ⟶ Calcul et affichage $\beta_o$

28

Point cible atteint? — oui

non

29

Changement point cible? — non

oui

FIN

**Fig. 3**

21

23

30

Determination
($x_c$, $y_c$)

32

Calcul $\Theta_{cible}$

$\Theta$

38

31

33

47

$-\Theta_0$ | $\Theta_0$

48    PID

40

PID

$\beta_2$

35

41

$\beta_3$    $\beta_1$

$\beta_0$

**Fig. 4**

49

$\beta_{max}$

60    57

55

50    58    56

51

$\beta$

Fig. 5

Fig. 6

EP 1 896 315 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 10142367
- US 6366221 B
- US 6564122 B
- WO 2004022413 A

- US 3605088 A
- US 6292094 B
- WO 9621582 A
- US 5247442 A